# EUROPEAN PATENT APPLICATION

(11) **EP 4 657 361 A1**
(43) Date of publication of application: **03.12.2025**
(21) Application number: 23918695.0
(22) Date of filing: 28.12.2023
(51) Int. Cl.: G06Q 50/18

(54) **INFORMATION PROCESSING DEVICE FOR CALCULATING DEGREE OF CONCENTRATION OF PATENT**

(30) Priority: 24.01.2023 JP 2023008634
(71) Applicant: Alps Alpine Co., Ltd., Tokyo 145-8501 (JP)
(72) Inventor: ITOH, Akihisa, Tokyo 145-8501 (JP); NAKAMURA, Maki, Tokyo 145-8501 (JP)
(74) Representative: Maiwald GmbH
(86) International application number: PCT/JP2023/047246
(87) International publication number: WO 2024/157741

(57) **Abstract**

To provide a technique capable of identifying a situation of development and investment activities of a specific applicant. The information processing apparatus 1 includes an acquirer 10 and a calculator 30. The acquirer 10 is configured to acquire patent information related to a plurality of patents held by a specific applicant. The calculator 30 is configured to calculate a concentration degree on a technical classification extracted under a predetermined condition in a patent group, where the patent group represents a group of patents classified into a predetermined period among a plurality of patents held by the specific applicant.

## Description

### Technical Field

The present invention relates to an information processing apparatus, an information processing method, and a program for executing information processing based on patent information.

### Background Art

Techniques are known for analyzing information about applicants using patent information. For example, Patent Document 1 discloses an information analysis method in which patent information is searched and the searched information is analyzed. The information analysis method includes a step of counting the number of pieces of target information within a predetermined period, which are retrieved based on preset conditions, and a step of calculating a growth rate for each predetermined period based on the counted number. Patent Document 2 discloses a technique that uses information on each patent or utility model application to classify inventors and generate inventor groups based on technical fields, and to output information such as the scale of each inventor group.

### Citation List

### Patent Documents

Patent Document 1: Japanese Patent Application Laid-Open No. 2000-148760
Patent Document 2: WO 2009/060713

### Summary of Invention

### Technical Problem

According to the technique disclosed in Patent Document 1, for example, when an applicant is specified as a search condition, it is possible to output a table illustrating applicants and their growth rates in descending order of the growth rate. According to the technique disclosed in Patent Document 2, it is possible to perform an analysis related to the organizational structure of applicants in research and development. However, conventional techniques have difficulty in identifying a situation of development and investment activities of a specific applicant.

Accordingly, it is an object of the present invention to provide an information processing apparatus, an information processing method, and a program capable of identifying a situation of development and investment activities of a specific applicant.

### Solution to Problem

According to an aspect of the present invention, an information processing apparatus includes: an acquirer configured to acquire patent information related to a plurality of patents held by a specific applicant; and a calculator configured to calculate a concentration degree on a technical classification, the technical classification being extracted under a predetermined condition from a patent group, and the patent group representing a group of patents classified into a predetermined period among the plurality of patents held by the specific applicant. With such a configuration, it is possible to calculate the concentration degree of patents held by the specific applicant on the technical classification extracted under the predetermined condition, thereby enabling the identification of a situation of the development and investment activities of a specific applicant.

In one embodiment, the calculator may include a first calculator configured to calculate a first concentration degree on a technical classification extracted under a predetermined condition from a first patent group, and a second concentration degree on the technical classification extracted under the predetermined condition from a second patent group, the first patent group representing a group of patents classified into a first period, the second patent group representing a group of patents classified into a second period later than the first period, and the first group and the second group being formed from among the plurality of patents held by the specific applicant; and a second calculator configured to calculate a concentration change degree representing a degree of change from the first concentration degree to the second concentration degree. With such a configuration, it is possible to calculate a time-dependent change in the concentration degree of the patents on the technical classification extracted under the predetermined condition, thereby enabling acquisition of useful information for monitoring the development and investment activities of the specific applicant.

In one embodiment, the first calculator may be configured to calculate the first concentration degree, based on a ratio of an evaluation value based on a number of patents in the technical classification extracted under the predetermined condition in the first patent group to an evaluation value based on a number of all patents in the first patent group; and calculate the second concentration degree, based on a ratio of an evaluation value based on a number of patents in the technical classification extracted under the predetermined condition in the second patent group to an evaluation value based on a number of all patents in the second patent group.

In one embodiment, the second calculator may be configured to calculate the concentration change degree based on an increase rate of the second concentration degree with respect to the first concentration degree.

In one embodiment, the information processing apparatus may further include an output unit configured to output information on the concentration change degree.

In one embodiment, the information processing apparatus may further include a generator configured to generate display information for graphically displaying the first concentration degree and the second concentration degree in a coordinate system in which a period including the first period and the second period is defined as a first axis, and a concentration including the first concentration and the second concentration is defined as a second axis, and the output unit may output the display information. With such a configuration, it is possible to express the time-dependent change in the concentration degree on the technical classification extracted under the predetermined condition for the specific applicant in a visually or relatively easily identifiable manner.

In one embodiment, the generator may be configured to generate, as the display information, information in which the first concentration degree and the second concentration degree are each represented by one or both of a bar graph and a line graph, and the concentration change degree may be represented by either a ratio of heights of the bar graphs or a slope of the line graph. With such a configuration, it is possible to express the time-dependent change in the concentration degree on the technical classification extracted under the predetermined condition for the specific applicant in a more visually or relatively easily identifiable manner.

In one embodiment, the specific applicant may include a plurality of applicants, the first calculator may be configured to calculate the first concentration degree and the second concentration degree for each of the plurality of applicants, and the second calculator may be configured to calculate the concentration change degree for each of the plurality of applicants. With such a configuration, it is possible to calculate a degree of time-dependent change in the concentration degree on the technical classification extracted under the predetermined condition for a plurality of applicants, thereby enabling identification of a situation of development and investment activities in a comparative manner across the applicants.

In one embodiment, the specific applicant may include a first specific applicant and a plurality of second specific applicants, and the first calculator may be configured to calculate the first concentration degree and the second concentration degree for the first specific applicant, and for each of the second specific applicants. With such a configuration, it is possible to collectively calculate a degree of the time-dependent change in the concentration degree on the technical classification extracted under the predetermined condition for a portion of the plurality of applicants, thereby facilitating identification of a situation of development and investment activities in a comparative manner across the applicants.

In one embodiment, the information processing apparatus may further include: a generator configured to generate display information, wherein the acquirer is further configured to acquire financial indicator information related to the specific applicant, the calculator further includes a third calculator configured to calculate, based on the financial indicator information, a change rate of a financial indicator of the specific applicant in the second period with respect to a financial indicator of the specific applicant in the first period, the generator is configured to generate the display information including a plot arranged at a position corresponding to the specific applicant in a coordinate system in which the concentration change degree is defined as a first axis, and the change rate of the financial indicator is defined as a second axis, and the output unit is configured to output the display information. With such a configuration, it is possible to compare, for the specific applicant, the degree of the time-dependent change in the concentration degree on the technical classification extracted under the predetermined condition and the change rate of the financial indicator.

In one embodiment, the financial indicator information may be information on a price-to-book ratio.

In one embodiment, the technical classification extracted under the predetermined condition may be a technical classification whose rank falls within a predetermined rank range among technical classifications included in the plurality of patents held by the specific applicant. With such a configuration, it is possible to calculate the concentration degree on the technical classifications which the specific applicant is particularly pursuing, thereby enabling identification of the situation of the development and investment activities of the specific applicant.

In one embodiment, the acquirer may be configured to acquire the patent information by treating one patent family as a single patent. With such a configuration, it is possible to perform an appropriate analysis without double-counting different patents within the same family.

In one embodiment, the calculator may be configured to determine whether a patent included in the patent information is classified into the predetermined period based on predetermined date information associated with the patent.

According to another aspect of the present invention, an information processing method includes: an acquisition step of acquiring patent information related to a plurality of patents held by a specific applicant; and a calculation step of calculating a concentration degree on a technical classification, the technical classification being extracted under a predetermined condition from a patent group, and the patent group representing a group of patents classified into a predetermined period among the plurality of patents held by the specific applicant. With such a configuration, it is possible to calculate the concentration degree of patents held by the specific applicant on the technical classification extracted under the predetermined condition, thereby enabling the identification of a situation of the development and investment activities of a specific applicant.

According to still another aspect of the present invention, a program for causing a computer to execute a process includes an acquisition step of acquiring patent information related to a plurality of patents held by a specific applicant; and a calculation step of calculating a concentration degree on a technical classification, the technical classification being extracted under a predetermined condition from a patent group, and the patent group representing a group of patents classified into a predetermined period among the plurality of patents held by the specific applicant. With such a configuration, it is possible to calculate the concentration degree of patents held by the specific applicant on the technical classification extracted under the predetermined condition, thereby enabling the identification of a situation of the development and investment activities of a specific applicant.

### Advantageous Effects of Invention

According to the present invention, it is possible to provide an information processing apparatus, an information processing method, and a program that are capable of identifying a situation of development and investment activities of a specific applicant.

### Brief Description of Drawings

[FIG. 1] FIG. 1 is a schematic configuration diagram of an information processing apparatus according to an embodiment.
[FIG. 2] FIG. 2 is a diagram illustrating a first configuration example of the information processing apparatus illustrated in FIG. 1.
[FIG. 3] FIG. 3 is a diagram illustrating a second configuration example of the information processing apparatus illustrated in FIG. 1.
[FIG. 4] FIG. 4 is a diagram illustrating an example of patent information.
[FIG. 5] FIG. 5 is a flowchart illustrating a first example of information processing executed by the information processing apparatus illustrated in FIG. 1.
[FIG. 6] FIG. 6 is a flowchart illustrating an example of the first and second calculation processes.
[FIG. 7] FIG. 7 is a flowchart illustrating an example of the first concentration degree calculation process.
[FIG. 8] FIG. 8 is a flowchart illustrating an example of the second concentration degree calculation process.
[FIG. 9] FIG. 9 is a flowchart illustrating an example of the first display information generation process.
[FIG. 10] FIG. 10 is a flowchart illustrating a second example of information processing executed by the information processing apparatus illustrated in FIG. 1.
[FIG. 11] FIG. 11 is a flowchart illustrating an example of the third calculation process.
[FIG. 12] FIG. 12 is a flowchart illustrating an example of the second display information generation process.
[FIG. 13] FIG. 13 is a diagram illustrating an example of a display screen.
[FIG. 14] FIG. 14 is a diagram illustrating an example of a display screen.
[FIG. 15] FIG. 15 is a diagram illustrating an example of a display screen.
[FIG. 16] FIG. 16 is a diagram illustrating an example of a display screen.
[FIG. 17] FIG. 17 is a diagram illustrating an example of a display screen.
[FIG. 18] FIG. 18 is a diagram illustrating an example of a display screen.
[FIG. 19] FIG. 19 is a diagram illustrating an example of a display screen.
[FIG. 20] FIG. 20 is a diagram illustrating an example of a display screen.
[FIG. 21] FIG. 21 is a diagram illustrating an example of a display screen.

### Description of Embodiments

Embodiments of the present disclosure will be described below with reference to the accompanying drawings. In the present specification and the drawings, the same reference numerals are used to designate the same elements having substantially the same functions or the same configurations, and the repeated description is omitted.

### (Schematic Configuration of Information Processing Apparatus)

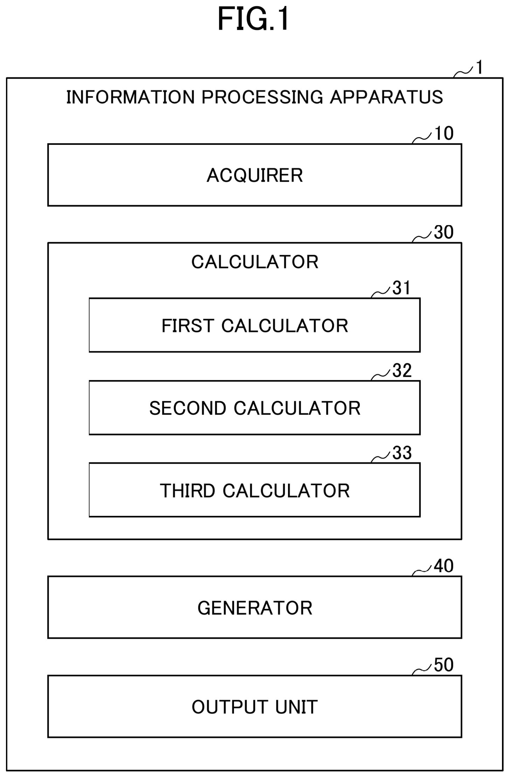

FIG. 1 is a schematic configuration diagram of an information processing apparatus 1 according to the present embodiment. The information processing apparatus 1 includes: an acquirer 10 and a calculator 30. The information processing apparatus 1 may further include at least one of a generator 40 and an output unit 50. The acquirer 10, the calculator 30, the generator 40, and the output unit 50 can be configured as functional blocks to be executed by a controller included in the information processing apparatus 1. However, the components corresponding to the functional blocks of the information processing apparatus 1 can be configured by a circuit block, a memory, or other LSI as hardware, and can be implemented by system software, a program loaded in the memory, or the like as software. Accordingly, these functional blocks can be implemented in various forms by means of hardware only, software only, or a combination of hardware and software, and the present invention is not limited to any of the foregoing.

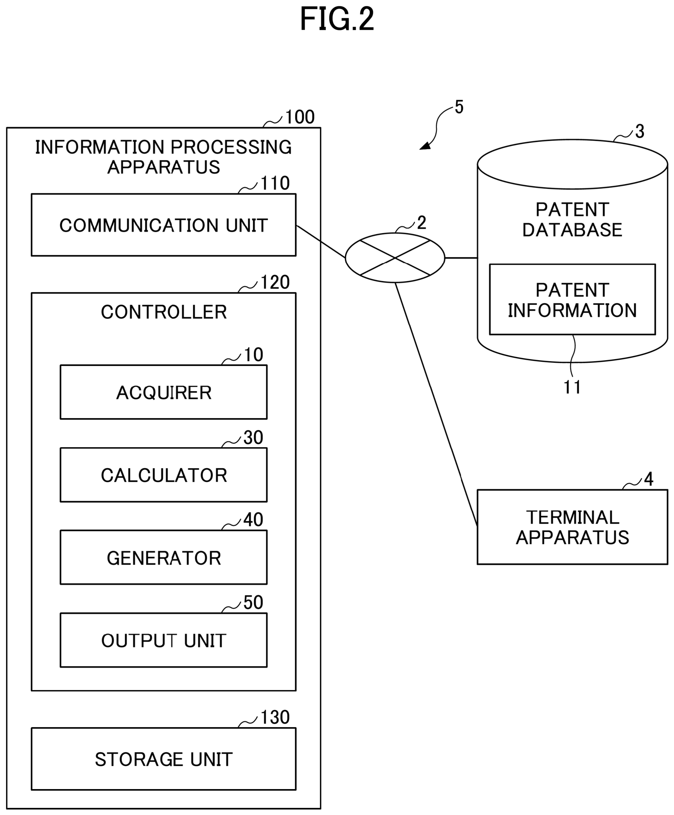

The acquirer 10 acquires patent information 11 (see FIG. 2, etc.). The patent information 11 pertains to a plurality of published patents and includes information related to one or more patents for each of one or more applicants or one or more right holders (hereinafter collectively referred to simply as "applicants"). In the present specification, the term "patent" may include utility models. Furthermore, the term "patent" is not limited to those that have been registered but may also include pending applications. The patent information 11 may include at least one of: information contained in patent gazettes issued by official institutions (including international organizations; the same applies hereinafter) of respective countries and regions; information on the prosecution history; information on trials; and litigation information. The patent information 11 may further include information that has been aggregated, analyzed, or otherwise processed based on information related to patents issued by official institutions of respective countries and regions, for example.

The patent information 11 is information related to a plurality of patents held by a specific applicant. The specific applicant is an applicant to be analyzed. The specific applicant may be one applicant or two or more applicants. For example, in the case where the same applicant is treated as different applicants in the patent information 11 due to differences in notation, or in the case where two or more applicants included in the same group company are to be collectively analyzed as one applicant to be analyzed, two or more applicants can be treated as a single specific applicant. The specific applicant may be set in advance, may be set when the information processing apparatus 1 executes information processing described later, or may be a combination of these.

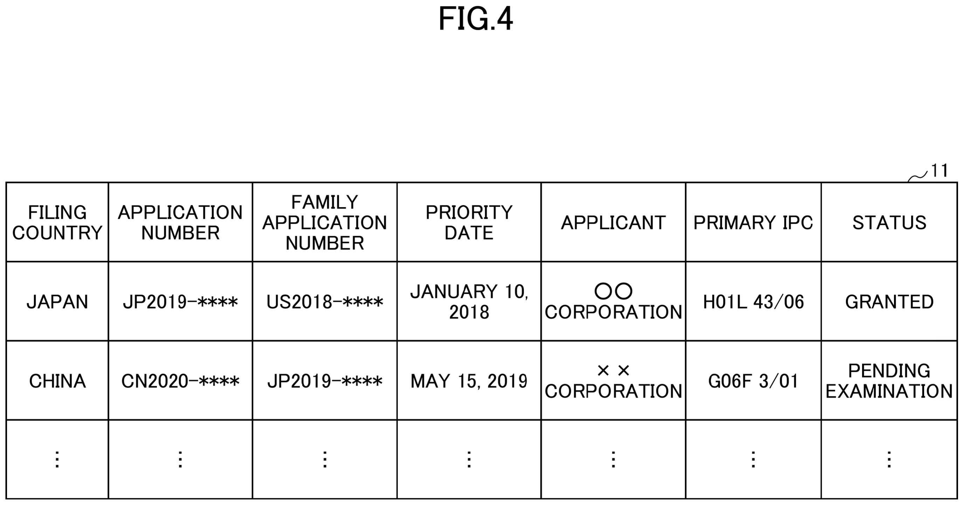

The calculator 30 calculates a concentration degree on a technical classification extracted under a predetermined condition in a patent group, which represents a group of patents classified into a predetermined period among a plurality of patents held by a specific applicant included in the patent information 11. Here, the patent group classified into a predetermined period indicates one or more patents whose predetermined date information (details will be described later with reference to FIG. 4), with which each patent is associated, falls within the predetermined period. The technical classification extracted under the predetermined condition may be, for example, a technical classification whose rank falls within a predetermined rank range among technical classifications included in the patent group of the specific applicant classified into the predetermined period. The rank of the technical classification may be, for example, a rank based on the number of patents corresponding to each technical classification, or a rank based on an evaluation value of each technical classification (details will be described later). The calculator 30 can calculate the concentration degree on a technical classification which the specific applicant is particularly pursuing by extracting a technical classification whose rank falls within a predetermined rank range. Thus, it is possible to identify the situation of the development and investment activities of the specific applicant.

The calculator 30 may include a first calculator 31 and a second calculator 32. The first calculator 31 calculates a first concentration degree representing a concentration degree on a technical classification extracted under a predetermined condition in a first patent group, which represents a group of patents classified into a first period among the plurality of patents held by the specific applicant. The first calculator 31 calculates a second concentration degree representing a concentration degree on the technical classification extracted under the predetermined condition in a second patent group, which represents a group of patents classified into a second period later than the first period among the plurality of patents of the specific applicant. The second calculator 32 calculates a concentration change degree representing a degree of change from the first concentration degree to the second concentration degree. The second calculator 32 may calculate the concentration change degree based on an increase rate of the second concentration degree with respect to the first concentration degree.

The calculator 30 may extract the technical classifications directly from the patent information 11, or may generate the technical classifications based on the patent information 11. When the calculator 30 directly extracts the technical classifications from the patent information 11, the calculator 30 may extract the patent classification information described in the patent gazette of each patent included in the patent information 11 as the technical classification. The patent classification information may include, for example, the International Patent Classification (hereinafter also referred to as "IPC"), Cooperative Patent Classification (CPC), File Index (FI), and F-terms. The patent classification information may also be a proprietary classification used in various commercial databases. When the technical classifications are generated based on the patent information 11, the calculator 30 may generate the technical classifications by text mining using machine learning from the contents described in the patent gazette of each patent included in the patent information 11. Alternatively, the patent information 11 may include information on technical classifications generated in advance by text mining using machine learning from the contents described in the patent gazette of each patent. In this case, the calculator 30 can directly extract the pre-generated technical classifications from the patent information 11.

Each patent included in the patent information 11 may include one technical classification or a plurality of technical classifications. When a given patent included in the patent information 11 includes a plurality of technical classifications, the calculator 30 may select one representative technical classification from the plurality of technical classifications included in the patent. One representative technical classification may be, for example, the primary IPC.

When the information processing apparatus 1 includes the output unit 50, the output unit 50 outputs the concentration change degree calculated by the second calculator 32. The output unit 50 may output at least a part of the patent information 11, the first concentration, and the second concentration in addition to the concentration change degree. The output unit 50 can output the output information in the form of display information described later, or in the form of information suitable for any information transmission method such as voice information, print information, etc.

When the information processing apparatus 1 includes the generator 40, the generator 40 generates display information. In this case, the output unit 50 may output the display information generated by the generator 40. The generator 40 may generate display information for graphically displaying the first concentration degree and the second concentration degree in a coordinate system in which a period including the first period and the second period is defined as a first axis, and a concentration including the first concentration and the second concentration is defined as a second axis.

As described above, the information processing apparatus 1 includes the acquirer 10 configured to acquires the patent information 11 related to the plurality of patents held by a specific applicant, and the calculator 30 configured to calculate a concentration degree on the technical classification extracted under the predetermined condition in the patent group classified into the predetermined period among the plurality of patents held by the specific applicant. According to such a configuration, since the concentration degree on the technical classification extracted under the predetermined condition can be calculated for the specific applicant, it is possible to identify the situation of the development and investment activities of the specific applicant.

The information processing apparatus 1 may have the following configuration in addition to the configuration described above. That is, the acquirer 10 may be configured to further acquire financial indicator information related to the specific applicant. The financial indicator information is, for example, information on the price-to-book ratio (PBR). The financial indicator information related to the specific applicant includes information on a financial indicator of the specific applicant in the first period and information on the financial indicator of the specific applicant in the second period. The acquirer 10 acquires financial indicator information associated with a company name corresponding to the specific applicant by referring to a financial indicator database that stores a company name and the financial indicator information in association with each other, for example. The financial indicator database may be a database external to the information processing apparatus 1 and connected to the information processing apparatus 1 via a network 2 or the like, as in the case of the patent database 3, or may be a component of the information processing apparatus 1.

The calculator 30 may further include a third calculator 33. The third calculator 33 calculates a change rate of the financial indicator of the specific applicant in the second period with respect to the financial indicator of the specific applicant in the first period, based on the financial indicator information acquired by the acquirer 10.

The generator 40 may generate display information including a plot arranged at a position corresponding to the specific applicant in a coordinate system in which:
- a concentration change degree is defined as a first axis, and
- the change rate of the financial indicator is defined as a second axis.

As described above, in the information processing apparatus 1 according to the embodiment, the acquirer 10 further acquires the financial indicator information related to the specific applicant. The third calculator 33 provided in the calculator 30 calculates the change rate of the financial indicator of the specific applicant in the second period with respect to the financial indicator of the specific applicant in the first period, based on the financial indicator information. The generator 40 generates display information including a plot arranged at a position corresponding to a specific applicant in a coordinate system in which a concentration change degree is defined as a first axis and a change rate of a financial indicator is defined as a second axis. According to this configuration, it is possible to compare the degree of time-dependent change in the concentration degree on the technical classification extracted under a predetermined condition with the change rate of the financial indicator related to the specific applicant.

### (First Configuration Example of Information Processing Apparatus)

FIG. 2 is a diagram illustrating an information processing apparatus 100 as a first configuration example of the information processing apparatus 1. The information processing apparatus 100 is connected to a patent database 3 and a terminal apparatus 4 via the network 2. The information processing apparatus 100, the patent database 3, and the terminal apparatus 4 collectively constitute an information processing system 5. The information processing system 5 is an example in which the information processing apparatus 100 functions as a server and the terminal apparatus 4 outputs display information.

The network 2 includes the Internet, at least one wide area network (WAN), at least one metropolitan area network (MAN), at least one wireless network, at least one optical network, or any combination thereof. The wireless network is, for example, an ad hoc network, a cellular network, a wireless local area network (LAN), a satellite communications network, or a terrestrial microwave network.

The information processing apparatus 100 includes a communication unit 110, a controller 120, and a storage unit 130.

The communication unit 110 includes at least one communication interface. The communication interface may correspond to any communication standard, for example, a wired LAN standard, a wireless LAN standard, or a mobile communication standard. The communication unit 110 receives data used for the operation of the information processing apparatus 100 and transmits data obtained by the operation of the information processing apparatus 100. Specifically, the communication unit 110 receives the patent information 11 from the patent database 3 via the network 2. More specifically, the communication unit 110 transmits the information output from the output unit 50 to the terminal apparatus 4 via the network 2.

The controller 120 includes at least one processor, at least one programmable circuit, at least one dedicated circuit, or any combination thereof. The processor is a general-purpose processor such as a central processing unit (CPU) or a graphics processing unit (GPU), or a processor specialized for a specific processing. The programmable circuit is, for example, a field-programmable gate array (FPGA). The dedicated circuit is, for example, an ASIC (application specific integrated circuit). The controller 120 executes processing related to the operation of the information processing apparatus 100 while controlling each unit of the information processing apparatus 100.

The controller 120 executes the functions of the acquirer 10, the calculator 30, the generator 40, and the output unit 50. The details of the functions of the acquirer 10, the calculator 30, the generator 40, and the output unit 50 are as described above.

The storage unit 130 is a storage device such as an HDD (hard disk drive) or a flash memory. The storage unit 130 may be a storage device built in the information processing apparatus 100, or an external storage device connected to the information processing apparatus 100 by a universal serial bus (USB) or the like. The storage unit 130 stores data and programs used for information processing executed by the information processing apparatus 100. The storage unit 130 may store information on the specific applicant to be analyzed in advance.

The patent database 3 stores information related to patents including patent information 11. The patent database 3 may be a database maintained by a public authority, a commercial database, or a combination thereof. The patent database 3 transmits the patent information 11 to the information processing apparatus 100 via the network 2 in response to a request from the information processing apparatus 100. The information processing apparatus 100 stores the patent information 11 transmitted from the patent database 3 in the storage unit 130. In the case where the patent database 3 is a commercial database, the patent database 3 may be a component of the information processing apparatus 100.

The terminal apparatus 4 is a computer having a communication function, and may be, for example, a PC (personal computer), a smartphone, a tablet terminal, or the like. The terminal apparatus 4 is provided with a display unit, receives display information transmitted from the information processing apparatus 100 via the network 2, and displays a video image based on the received display information on the display unit. The terminal apparatus 4 may include an input unit such as a keyboard or a touch panel, and may transmit an information processing execution request to the information processing apparatus 100 based on a command input through the input unit, and may receive display information or the like as an execution result of the information processing. The terminal apparatus 4 may transmit information on a specific applicant to the information processing apparatus 100 based on the designation information of the specific applicant input through the input unit.

### (Second Configuration Example of Information Processing Apparatus)

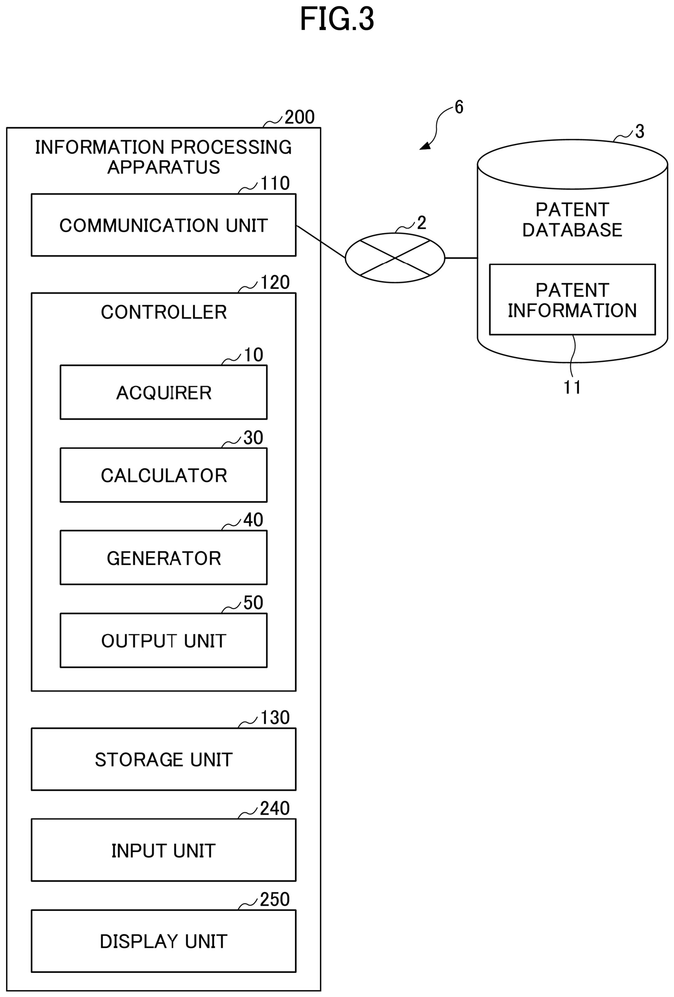

FIG. 3 is a diagram illustrating an information processing apparatus 200 as a second configuration example of the information processing apparatus 1. The information processing apparatus 200 is connected to the patent database 3 via the network 2. The information processing apparatus 200 and the patent database 3 collectively constitute an information processing system 6. The information processing system 6 is an example of causing the information processing apparatus 200 to output display information.

The information processing apparatus 200 includes a communication unit 110, a controller 120, a storage unit 130, an input unit 240, and a display unit 250.

The input unit 240 includes at least one input interface. The input interface is, for example, a physical key, a capacitance key, a pointing device, a touch screen provided integrally with the display unit 250, a camera, a LiDAR (Light Detection and Ranging, or Laser Imaging Detection and Ranging), or a microphone. The input unit 240 receives an operation for inputting data used for the operation of the information processing apparatus 200. The input unit 240 may be connected to the information processing apparatus 200 as an external input device instead of being provided in the information processing apparatus 200. As the connection interface, for example, an interface corresponding to a standard such as USB (Universal Serial Bus) or Bluetooth (registered trademark) can be used.

The input unit 240 may transmit the input command to the controller 120 to cause the controller 120 to execute information processing. The input unit 240 may cause the controller 120 to execute information processing using the input information of the specific applicant.

The display unit 250 is, for example, a liquid crystal display (LCD) or an organic electroluminescent (EL) display. The display unit 250 displays a video image based on the display information output from the output unit 50.

### (Example of Patent Information)

FIG. 4 is a diagram illustrating an example of the patent information 11. As illustrated in FIG. 4, the patent information 11 is information in which, for example, the filing country of application, the application number, the family application number, the priority date, the applicant, the primary IPC, and the status are associated with each of a plurality of patents.

The filing country of application is information indicating the country or region where the patent was filed. The application number is an example of the identification information of the patent. The patent identification information may be the application number, publication number, registration number, etc. The family application number is an example of the identification of a patent family. The priority date is an example of the predetermined date information with which the patent is associated. The predetermined date information may be the filing date, the publication date, the registration date, the issuance date, etc., in addition to the priority date. The applicant is information that collectively indicates the applicant or the patent right holder, as described above. The primary IPC is an example of patent classification information used as the technical classification of the patent and is the IPC granted as the representative of one or more IPCs granted for the patent. The status is information indicating the examination status, maintenance status, and the like of the patent.

The patent information 11 may include only one of a plurality of patents belonging to the same patent family. In other words, the acquirer 10 may acquire the patent information 11 by treating one patent family as a single patent. The patent information 11 may be information on patents of a plurality of countries or regions, or information on a patent of a specific country or region.

The patent information 11 may be information related to a patent whose predetermined date information falls within a certain period. In other words, the acquirer 10 may acquire the patent information 11 related to the patent whose predetermined date information falls within a certain period. Here, the certain period is a certain period including the above-mentioned "predetermined period".

### (Information Processing Executed by Information Processing Apparatus)

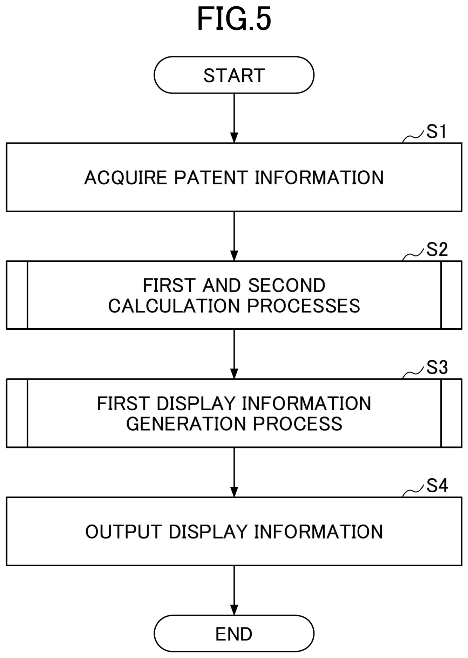

FIG. 5 is a flowchart illustrating a first example of information processing executed by the information processing apparatus illustrated in FIG. 1. The acquirer 10 acquires patent information 11 related to a plurality of patents of a specific applicant (step S1).

The calculator 30 executes the first and second calculations based on the patent information 11 acquired by the acquirer 10 (step S2). The details of the first and second calculation processes will be described later.

The generator 40 executes the first display information generation process (step S3). The first display information generation process will be described in detail later.

The output unit 50 outputs the display information generated by the first display information generation process (step S4).

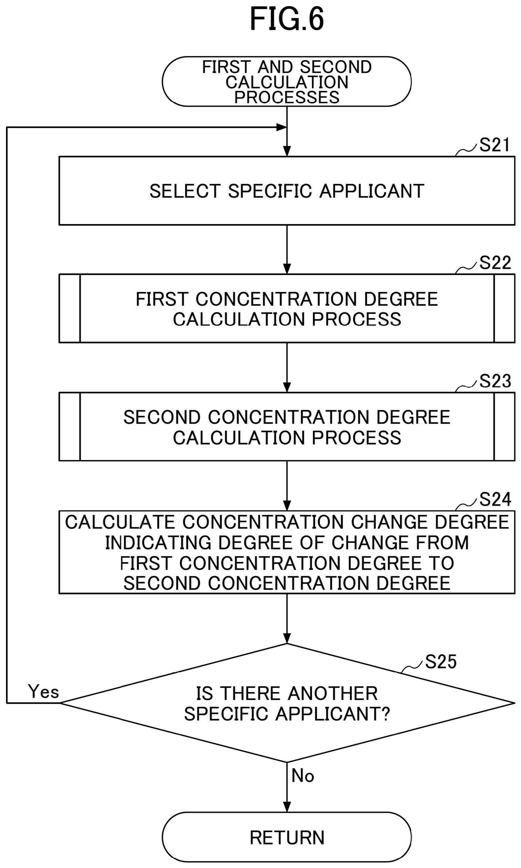

FIG. 6 is a flowchart illustrating an example of the first and second calculation processes (step S2 in FIG. 5) executed by the calculator 30. The calculator 30 selects one specific applicant from the patent information 11 acquired by the acquirer 10 in step S1 (step S21).

The calculator 30 calculates a first concentration degree for the specific applicant selected in step S21 (step S22). The process of step S22 is referred to as a first concentration degree calculation process, and will be described in detail later.

The calculator 30 calculates a second concentration degree for the specific applicant selected in step S21 (step S23). The process of step S23 is referred to as a second concentration degree calculation process, and will be described in detail later.

The calculator 30 calculates a concentration change degree representing a degree of change from the first concentration degree to the second concentration degree (step S24). For example, the calculator 30 calculates the concentration change degree based on the increase rate of the second concentration degree with respect to the first concentration degree.

The calculator 30 determines whether or not there is another specific applicant other than the specific applicant already selected in step S21 in the patent information 11 (step S25). When it is determined that there is another specific applicant (Yes in step S25), the calculator 30 returns to the process of step S21. When it is determined that there is no other specific applicant, that is, that the processes of steps S22 to S23 have been executed for all specific applicants (No in step S25), the calculator 30 ends the first and second calculation processes.

In the first and second calculation processes, the processes of steps S22 and S23 is the first calculation process executed by the first calculator 31. In the first and second calculation processes, the process of step S24 is the second calculation process executed by the second calculator 32.

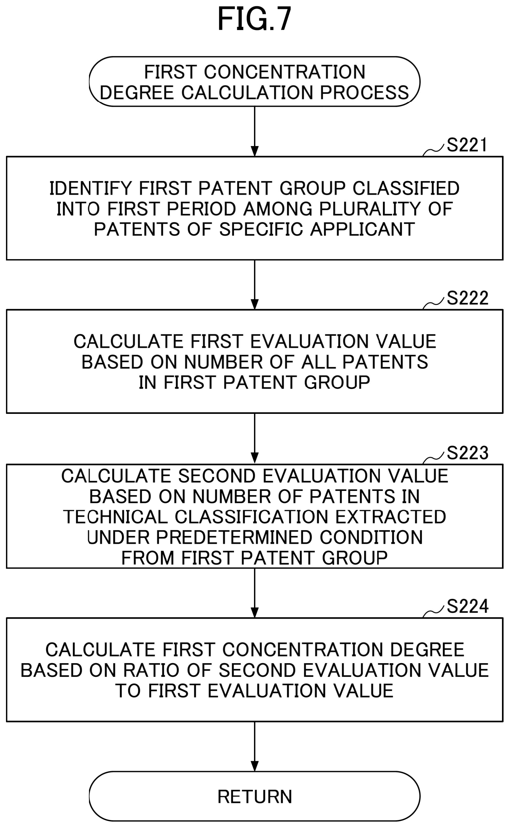

FIG. 7 is a flowchart illustrating an example of the first concentration degree calculation process (step S22 in FIG. 6) executed by the first calculator 31. The first calculator 31 identifies a first patent group classified into the first period among a plurality of patents of the specific applicant (step S221).

The first calculator 31 calculates a first evaluation value based on the number of all patents in the first patent group (step S222). Here, the first evaluation value is an example of an evaluation value. The evaluation value is an indicator for evaluating the value of a certain patent group, and is obtained by multiplying the average value of the scores of the respective patents calculated according to a predetermined rule by the number of patents included in the patent group. The score of each patent can be determined according to publicly known methods for calculating patent scores, and may be comprehensively determined by taking into consideration, for example, the number of times the patent has been cited as a reference document during examination, the number of times information has been provided regarding the patent, and whether or not there has been a corresponding foreign application. For simplicity, the evaluation value may be determined based only on the number of patents included in the patent group without using the score of each patent.

The first calculator 31 calculates a second evaluation value based on the number of patents in the technical classification extracted under a predetermined condition from the first patent group (step S223). The second evaluation value is an example of the evaluation value described above. The technical classification extracted under the predetermined condition from the first patent group is obtained by extracting a technical classification whose rank falls within a predetermined rank range among the technical classifications included in the first patent group.

The first calculator 31 calculates a first concentration degree based on the ratio of the second evaluation value to the first evaluation value (step S224), and ends the first concentration degree calculation process.

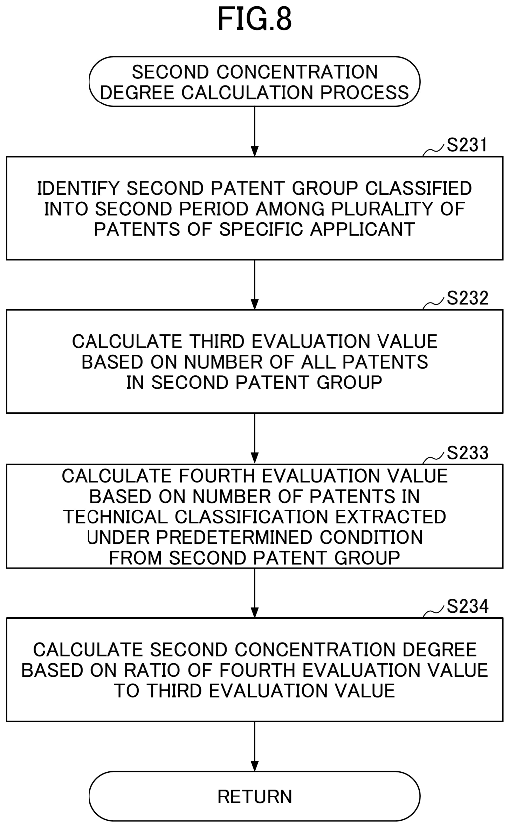

FIG. 8 is a flowchart illustrating an example of the second concentration degree calculation process (step S23 in FIG. 6) executed by the first calculator 31. The first calculator 31 identifies a second patent group classified into the second period among the plurality of patents of the specific applicant (step S231).

The first calculator 31 calculates a third evaluation value based on the number of all patents in the second patent group (step S232). The third evaluation value is an example of the evaluation value described above.

The first calculator 31 calculates a fourth evaluation value based on the number of patents in the technical classification extracted under a predetermined condition from the second patent group (step S233). The fourth evaluation value is an example of the evaluation value described above. The technical classification extracted under the predetermined condition from the second patent group is obtained by extracting technical classifications within a predetermined rank range from among the technical classifications included in the second patent group. Among the patents of the specific applicant, the first patent group classified into the first period and the second patent group classified into the second period are different from each other. Therefore, the technical classifications extracted in step S223 of FIG. 7 do not necessarily match the technical classifications extracted in this step.

The first calculator 31 calculates a second concentration degree based on the ratio of the fourth evaluation value to the third evaluation value (step S234), and ends the second concentration degree calculation process.

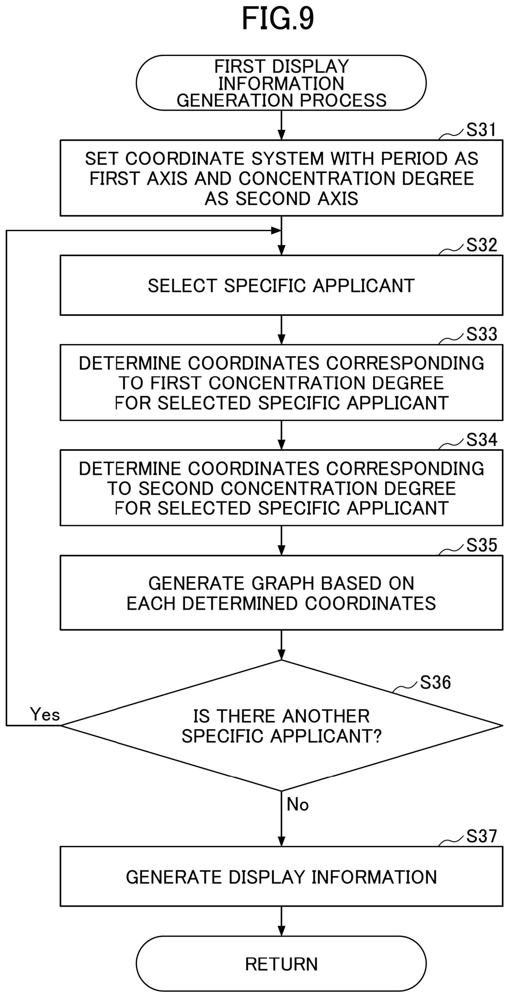

FIG. 9 is a flowchart illustrating an example of the first display information generation process (step S3 in FIG. 5) executed by the generator 40. The generator 40 sets a coordinate system with a period as a first axis and a concentration degree as a second axis (step S31). The coordinate system set in step S31 may be a plane coordinate system including a first axis and a second axis, or may be a coordinate system of three or more dimensions in which other coordinate axes are added to the first axis and the second axis.

The generator 40 selects a specific applicant from the patent information 11 acquired by the acquirer 10 in step S1 (step S32).

The generator 40 determines coordinates corresponding to the first concentration degree for the specific applicant selected in step S32 in the coordinate system set in step S31 (step S33). The generator 40 determines coordinates corresponding to the second concentration degree for the specific applicant selected in step S32 in the coordinate system set in step S31 (step S34).

The generator 40 generates a graph based on the coordinates determined in steps S33 and S34 (step S35). More specifically, the generator 40 generates a graph representing the coordinates determined in step S33 and the coordinates determined in step S34. The generator 40 may generate a graph in which coordinates are represented by at least one of a bar graph or a line graph. When the generator 40 generates bar graphs represented by heights corresponding to the respective coordinates, the concentration degree change can be represented by a ratio of heights of the bar graphs. When the generator 40 generates a line graph connecting the coordinates, the concentration degree change can be represented by a slope of the line graph.

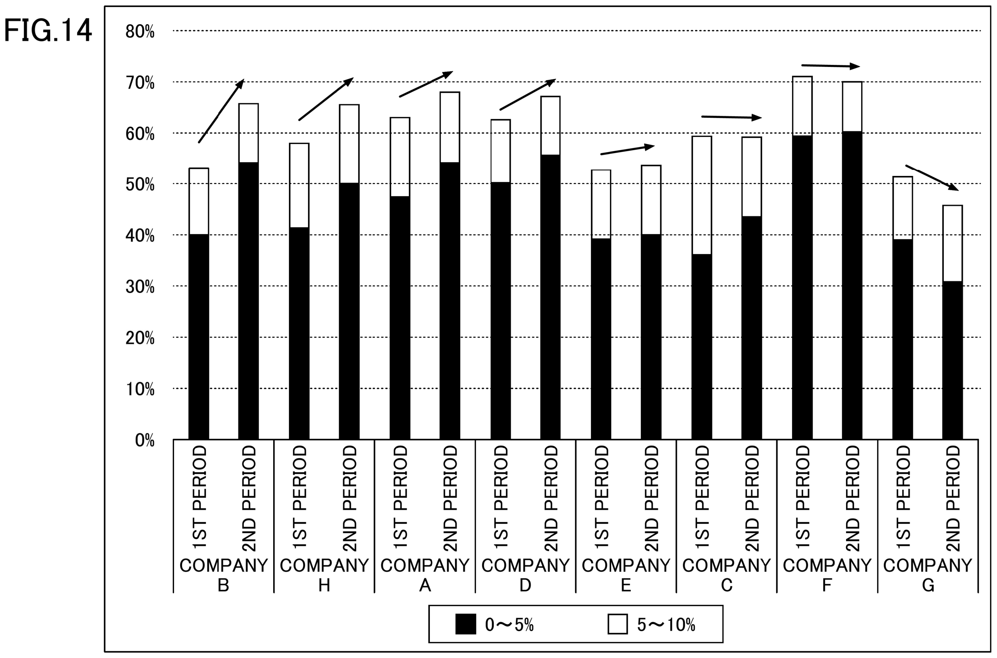

In the case where the generator 40 generates information in which the first concentration and the second concentration are each represented by one or both of the bar graph and the line graph as described above, and the concentration change degree is represented by either the ratio of heights of the bars in the bar graph or the slope of the line graph, the calculation process of the concentration change (step S24 in FIG. 6) by the second calculator 32 may not be executed. The generator 40 may generate the concentration change degree calculated in step S24 as display information such as a numerical value or a symbol. An example of generating the concentration change degree as a symbol by the generator 40 is an example of generating the concentration change degree as an arrow symbol described later with reference to FIG. 14.

The generator 40 determines whether or not there is another specific applicant other than the specific applicant already selected in step S32 in the patent information 11 (step S36). When it is determined that there is another specific applicant (Yes in step S36), the generator 40 returns to the process of step S32. When it is determined that there is no other specific applicant, that is, that the processes of steps S33 to S35 have been executed for all specific applicants (No in step S36), the generator 40 proceeds to the process of step S37.

The generator 40 generates display information based on the processes of steps S31 to S36 (step S37), and ends the first display information generation process.

As described above, the information processing apparatus 1 executes a first embodiment of information processing according to the flowcharts of FIGS. 5 to 9. According to the first embodiment of the information processing executed by the information processing apparatus 1, it is possible to visually or relatively easily identify the time-dependent change in the concentration degree on the technical classification extracted under the predetermined condition for the specific applicant. In addition, since the degree of time-dependent change in the concentration degree in the technical classification extracted under the predetermined condition can be calculated for a plurality of applicants, it is possible to identify and compare respective situations of development and investment activities of a plurality of applicants.

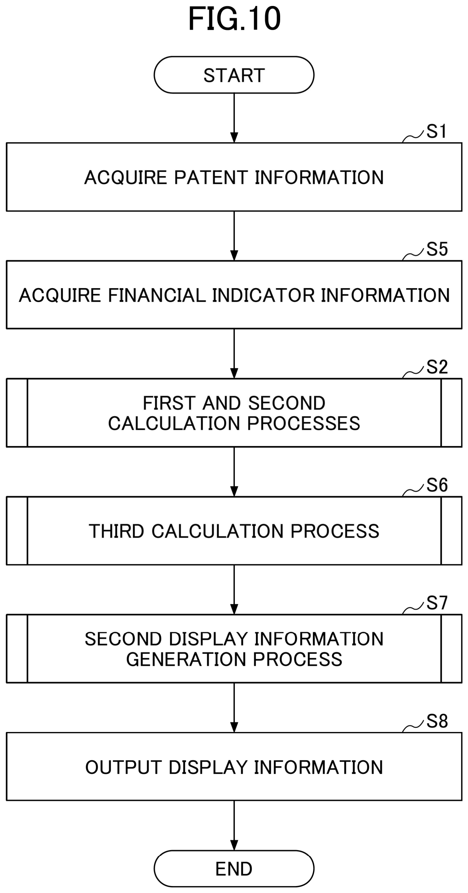

FIG. 10 is a flowchart illustrating a second embodiment of information processing executed by the information processing apparatus 1. In FIG. 10, the same steps as those in the first embodiment illustrated in FIG. 5 are denoted by the same reference numerals, and detailed description thereof will be omitted.

The acquirer 10 acquires patent information 11 related to a plurality of patents of a specific applicant (step S1). In addition to the process of step S1, the acquirer 10 acquires financial indicator information related to the specific applicant (step S5). Here, when there are a plurality of specific applicants, the acquirer 10 acquires financial indicator information related to each of the specific applicants.

The calculator 30 executes first and second calculation processes (step S2). The details of the first and second calculation processes are as described above.

The calculator 30 executes a third calculation process (step S6). The details of the third calculation process will be described later.

The generator 40 executes the second display information generation process (step S7). The details of the second display information generation process will be described later.

The output unit 50 outputs the display information generated by the second display information generation process (step S8).

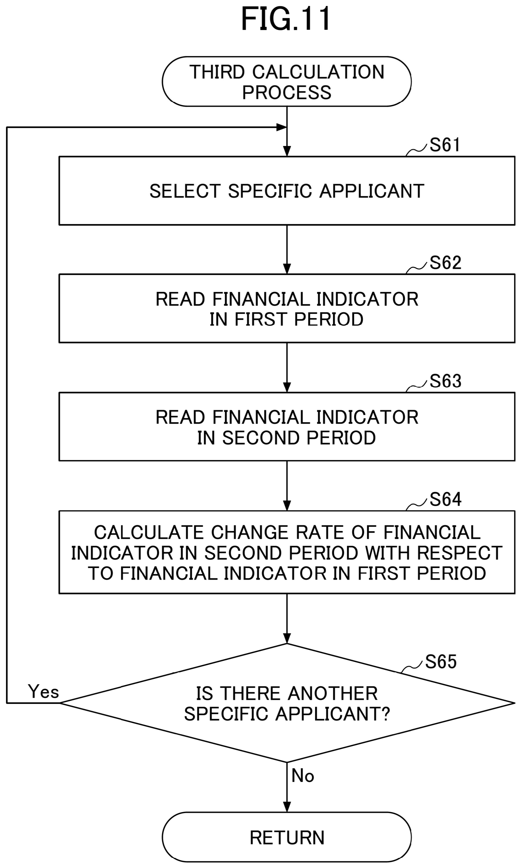

FIG. 11 is a flowchart illustrating an example of the third calculation process (step S6 in FIG. 10) executed by the third calculator 33 included in the calculator 30. The third calculator 33 selects one specific applicant from the patent information 11 acquired by the acquirer 10 in step S1 (step S61).

The third calculator 33 reads a financial indicator in the first period from the financial indicator information acquired by the acquirer 10 in step S5 related to the specific applicant selected in step S61 (step S62). In this case, the financial indicator information is financial indicator information associated with the specific applicant.

The third calculator 33 reads a financial indicator in the second period from the financial indicator information acquired by the acquirer 10 in step S5 related to the specific applicant selected in step S61 (step S63).

The third calculator 33 calculates a change rate of the financial indicator in the second period with respect to the financial indicator in the first period related to the specific applicant selected in step S61.

The third calculator 33 determines whether or not there is another specific applicant other than the specific applicant already selected in step S61 in the patent information 11 (step S65). When it is determined that there is another specific applicant (Yes in step S65), the third calculator 33 returns to the process of step S61. When it is determined that there is no other specific applicant, that is, that the processes of steps S62 to S64 have been executed for all specific applicants (No in step S65), the third calculator 33 ends the third calculation process.

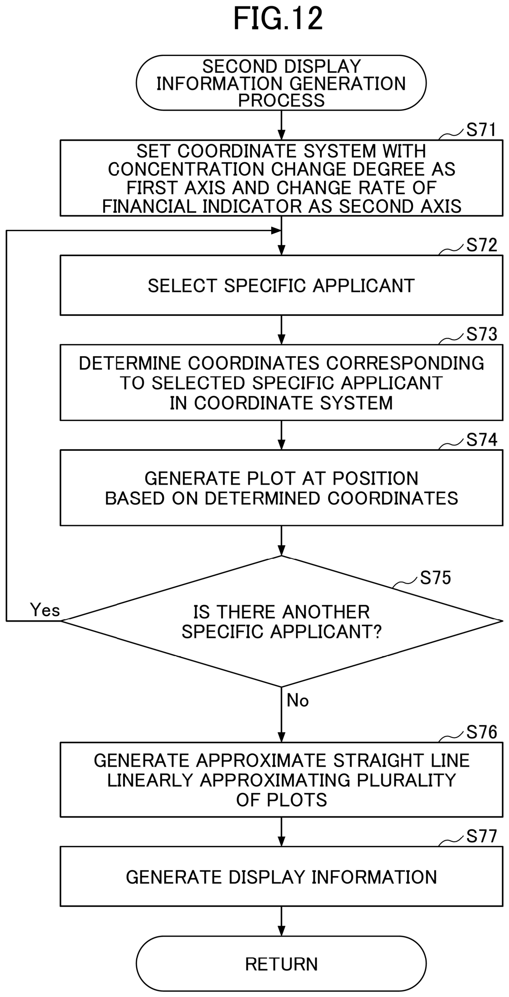

FIG. 12 is a flowchart illustrating an example of the second display information generation process (step S7 in FIG. 10) executed by the generator 40. The generator 40 sets a coordinate system in which the concentration change degree is defined as a first axis and a change rate of the financial indicator is defined as a second axis (step S71). The coordinate system set in step S71 may be a planar coordinate system including a first axis and a second axis, or may be a coordinate system of three or more dimensions in which other coordinate axes are added to the first axis and the second axis.

The generator 40 selects a specific applicant from the patent information 11 acquired by the acquirer 10 in step S1 (step S72).

The generator 40 determines the coordinates corresponding to the specific applicant selected in step S72 in the coordinate system set in step S71 based on the concentration change degree for the specific applicant and a change rate of the financial indicator (step S73).

The generator 40 generates a plot at a position based on the coordinates determined in step S73 (step S74).

The generator 40 determines whether or not there is another specific applicant other than the specific applicant already selected in step S72 in the patent information 11 (step S75). When it is determined that there is another specific applicant (Yes in step S75), the generator 40 returns to the process of step S72. When it is determined that there is no other specific applicant, that is, the processes of steps S73 and S74 have been executed for all specific applicants (No in step S75), the generator 40 proceeds to the process of step S76.

The generator 40 generates an approximate straight line that linearly approximates the plurality of plots generated by repeating steps S72 to S75 (step S76).

The generator 40 generates display information based on the processes of steps S71 to S76 (step S77), and ends the second display information generation process.

As described above, the information processing apparatus 1 executes the second embodiment of the information processing according to the flowcharts of FIGS. 6 to 8 and FIGS. 10 to 12.

According to the second embodiment of the information processing executed by the information processing apparatus 1, it is possible to compare, for the specific applicant, a degree of the time-dependent change in the concentration degree on the technical classification extracted under a predetermined condition and the change rate of the financial indicator.

### (Display Screen Example)

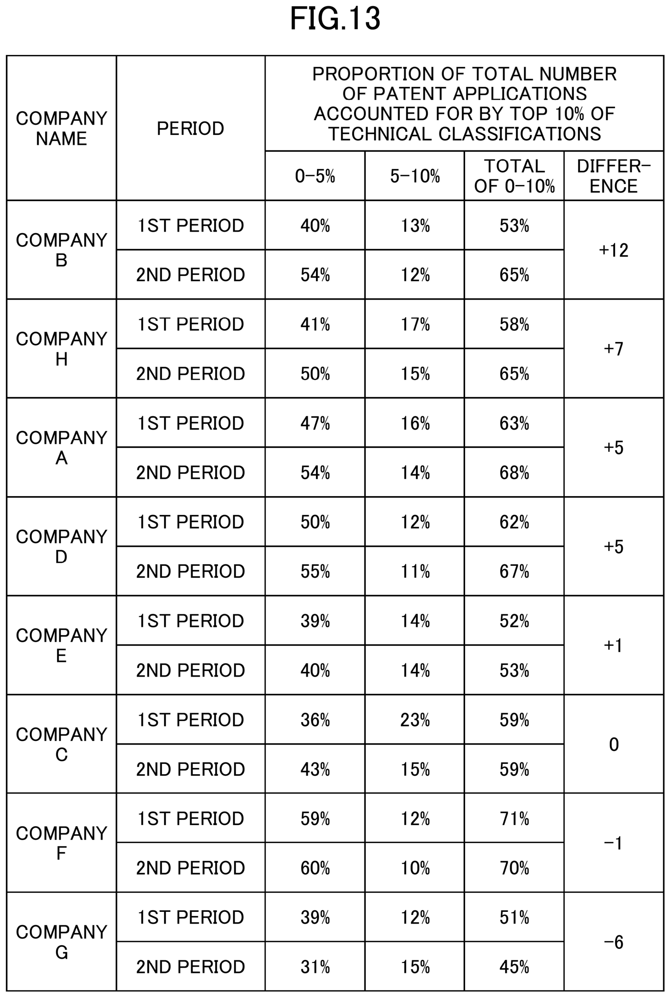

FIGS. 13 to 21 are diagrams illustrating an example of a display screen. The display screens illustrated in FIGS. 13 to 21 are examples of screens displayed by the display unit of the terminal apparatus 4 illustrated in FIG. 2, the display unit 250 of the information processing apparatus 200 illustrated in FIG. 3, and the like.

FIG. 13 is a display screen illustrating values of the first concentration degree, the second concentration degree, and the concentration change degree for each of the companies A to H as the specific applicants. In FIG. 13, predetermined conditions used for calculating the first concentration degree include a condition for extracting the top 5% of technical classifications, a condition for extracting the top 5% to 10% of technical classifications, and a condition for extracting the top 10% of technical classifications, among the technical classifications included in the first patent group of patents held by the specific applicants classified into the first period. For example, the first concentration degree for Company B is displayed as "40%" under the condition of extracting the top 5% of technical classifications, "13%" under the condition of extracting the top 5% to 10% of technical classifications, and "53%" under the condition of extracting the top 10% of technical classifications.

Similarly, in FIG. 13, the predetermined conditions used for calculating the second concentration degree include a condition for extracting the top 5% of the technical classifications, a condition for extracting the top 5% to 10% of the technical classifications, and a condition for extracting the top 10% of the technical classifications, among the technical classifications included in the second patent group of patents held by the specific applicant classified into the second period. For example, the second concentration degree for Company B is displayed as "54%" under the condition of extracting the top 5% of technical classifications, "12%" under the condition of extracting the top 5% to 10% of technical classifications, and "65%" under the condition of extracting the top 10% of technical classifications.

FIG. 13 illustrates the concentration change degree when the predetermined condition is a condition for extracting the top 10% of the technical classifications. For example, the concentration change degree of Company B is an increase rate of the second concentration degree with respect to the first concentration degree when the predetermined condition is a condition for extracting the top 10% technical classifications, and is displayed as "+12%" as the "difference".

The display screen illustrated in FIG. 13 also illustrates the first concentration degree, the second concentration degree, and the concentration change degree in the same way as Company B in the table for Company A and also Companies C to H.

As illustrated in FIG. 13, the display screen that displays the values of the first concentration degree, the second concentration degree, and the concentration change degree for each specific applicant in the table can express the time-dependent change in the concentration degree on the technical classifications for the specific applicant extracted under the predetermined condition in a relatively easy-to-understand manner.

FIG. 14 is a display screen illustrating bar graphs representing the first concentration degree, second concentration degree, and concentration change degree for each of specific applicants A to H. In FIG. 14, the horizontal axis as a first axis represents a period including a first period and a second period. The vertical axis as a second axis represents a concentration degree including the first concentration degree and the second concentration degree. In FIG. 14, the predetermined condition used for calculating the first concentration degree, the predetermined condition used for calculating the second concentration degree, the first concentration degree, the second concentration degree, and the concentration change degree for each specific applicant are the same as those displayed on the screen illustrated in FIG. 13.

The display screen illustrated in FIG. 14 includes, for each specific applicant, a bar graph corresponding to the first concentration degree when a predetermined condition used for calculating the first concentration degree is set as a condition for extracting the top 5% of the technical classifications included in the first patent group of the specific applicant classified into the first period, and a bar graph corresponding to the first concentration degree when the predetermined condition is set as a condition for extracting the top 5% to 10% of the technical classifications. A bar graph corresponding to the first concentration degree when the predetermined condition used for calculating the first concentration degree is a condition for extracting the top 10% of the technical classifications included in the first patent group of the specific applicant classified into the first period is also represented by stacking these bar graphs.

Similarly, the display screen illustrated in FIG. 14 includes, for each specific applicant, a bar graph corresponding to the second concentration degree when the predetermined condition used for calculating the second concentration degree is set as a condition for extracting the top 5% of the technical classifications included in the second patent group of the specific applicant classified into the second period, and a bar graph corresponding to the second concentration degree when the predetermined condition is set as a condition for extracting the top 5% to 10% of the technical classifications. A bar graph corresponding to the second concentration degree when the predetermined condition used for calculating the second concentration degree is a condition for extracting the top 10% of the technical classifications included in the second patent group of the specific applicant classified into the second period is also represented by stacking these bar graphs.

The display screen illustrated in FIG. 14 illustrates a bar graph indicating the first concentration degree and a bar graph indicating the second concentration degree, for each specific applicant. The ratio of the heights of these bar graphs indicates a concentration degree change for each specific applicant. The display screen illustrated in FIG. 14 also illustrates the concentration change degree for each specific applicant by an arrow symbol. In the display screen illustrated in FIG. 14, when the arrow symbol is inclined to the upper right, that is, the slope is positive, it indicates that the concentration change degree is positive. This can be interpreted that the technologies of the specific applicant tend to be concentrated on a specific field. When the arrow symbol is inclined to the lower right, that is, the slope is negative, it indicates that the concentration change degree is negative. This can be interpreted that the technologies of the specific applicant tend to diverge.

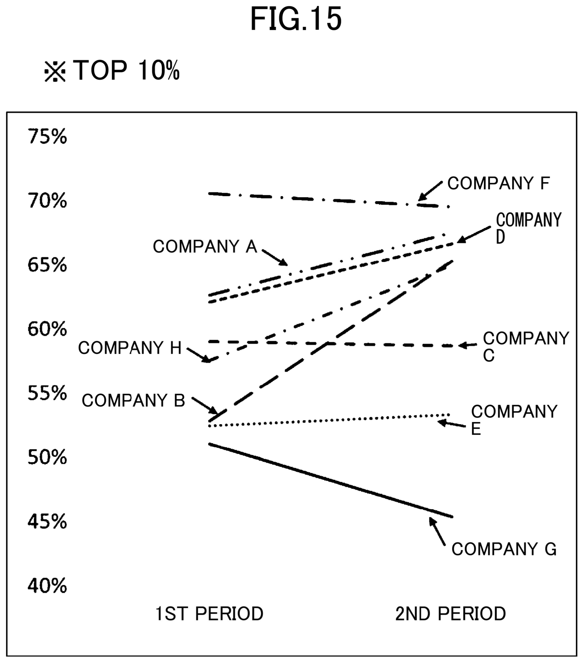

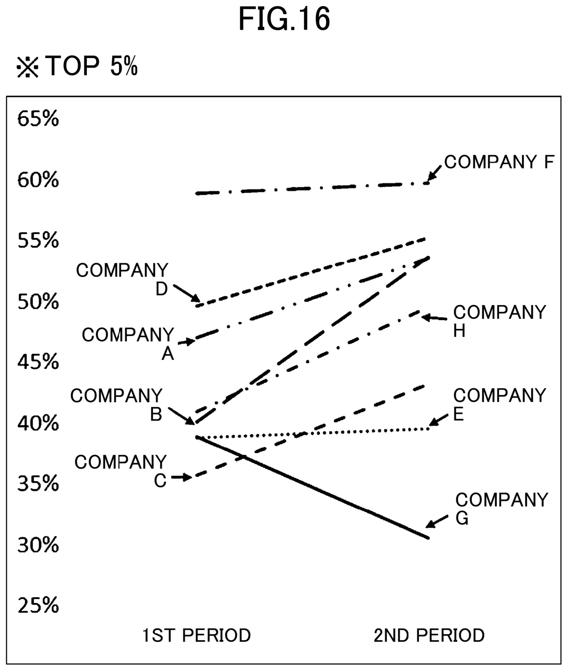

FIGS. 15 and 16 are display screens illustrating the first concentration degree, the second concentration degree, and the concentration change degree, for each of the companies A to H as the specific applicants in a corresponding line graph. In FIGS. 15 and 16, the horizontal axis as the first axis is a period including the first period and the second period. The vertical axis as the second axis is the concentration degree including the first concentration degree and the second concentration degree. In FIGS. 15 and 16, the predetermined condition used for calculating the first concentration degree, the predetermined condition used for calculating the second concentration degree, and the first concentration degree, the second concentration degree, and the concentration degree change for each specific applicant are all the same as those in the display screen illustrated in FIG. 13.

More specifically, the display screen illustrated in FIG. 15 indicates line graphs, based on coordinates corresponding to the first concentration degree when the predetermined condition used for calculating the first concentration degree is a condition for extracting the top 10% of the technical classifications included in the first patent group of the specific applicant classified into the first period, and coordinates corresponding to the second concentration degree when the predetermined condition used for calculating the second concentration degree is a condition for extracting the top 10% of the technical classifications included in the second patent group of the specific applicant classified into the second period. The display screen illustrated in FIG. 15 illustrates the concentration change degree by the slope of the line graph. The information represented by the slope of the line graph is similar to the slope of the arrow symbol illustrated in FIG. 14.

More specifically, the display screen illustrated in FIG. 16 is a line graph based on coordinates corresponding to the first concentration degree when the predetermined condition used for calculating the first concentration degree is a condition for extracting the top 5% of the technical classifications among the technical classifications included in the first patent group of the specific applicant classified into the first period, and coordinates corresponding to the second concentration degree in a case where a predetermined condition used for calculating the second concentration degree is a condition for extracting the top 5% of the technical classifications among the technical classifications included in the second patent group of the specific applicant classified into the second period. The display screen illustrated in FIG. 16 illustrates the concentration change degree by a slope of the line graph. The information represented by the slope of the line graph is similar to the slope of the arrow symbol illustrated in FIG. 14.

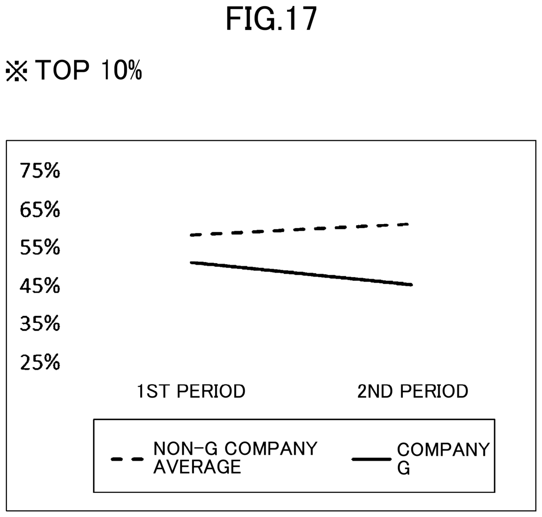

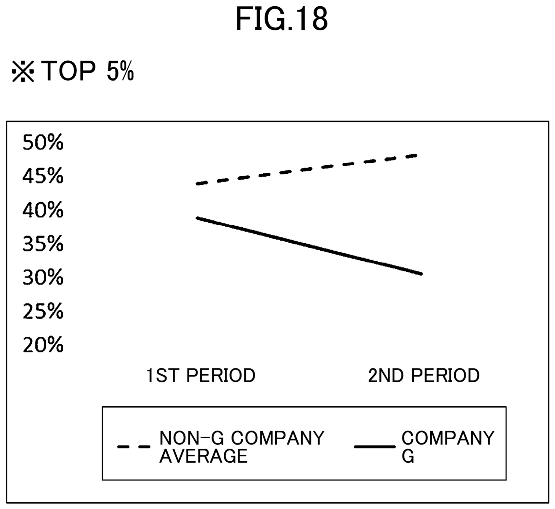

FIG. 17 is a display screen in which the first concentration degree and the second concentration degree of all companies other than Company G, that is, the first concentration degree and the second concentration degree of Companies A to F and Company H are calculated and illustrated in the display screen illustrated in FIG. 15. FIG. 18 is a display screen in which the first concentration degree and the second concentration degree of all companies other than Company G, that is, the first concentration degree and the second concentration degree for Companies A to F and Company H are calculated and illustrated in the display screen illustrated in FIG. 16.
FIG. 17 is a display screen using calculated values of the first concentration degree and the second concentration degree for all applicants other than Company G, namely Companies A through F and Company H, on the display screen illustrated in FIG. 15. FIG. 18 is a display screen using calculated values of the first concentration degree and the second concentration degree for all applicants other than Company G, namely Companies A through F and Company H, on the display screen illustrated in FIG. 16. Here, Company G is referred to as a first specific applicant, and Companies A through F and Company H, which are other than Company G, are referred to as a plurality of second specific applicants. Accordingly, it is possible to collectively calculate the degree of time-dependent change in the concentration degree of technical classification extracted under the predetermined condition, for a portion of a plurality of applicants, thereby facilitating comparison of the situations of development and investment activities among the plurality of applicants (in this case, between Company G and applicants other than Company G).

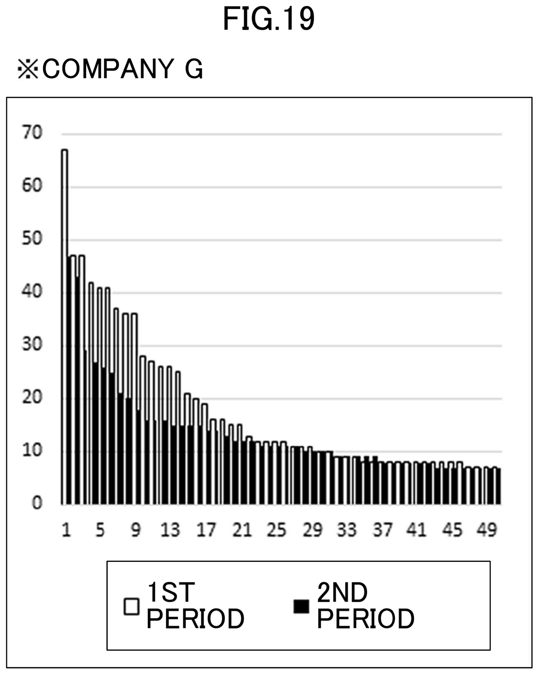

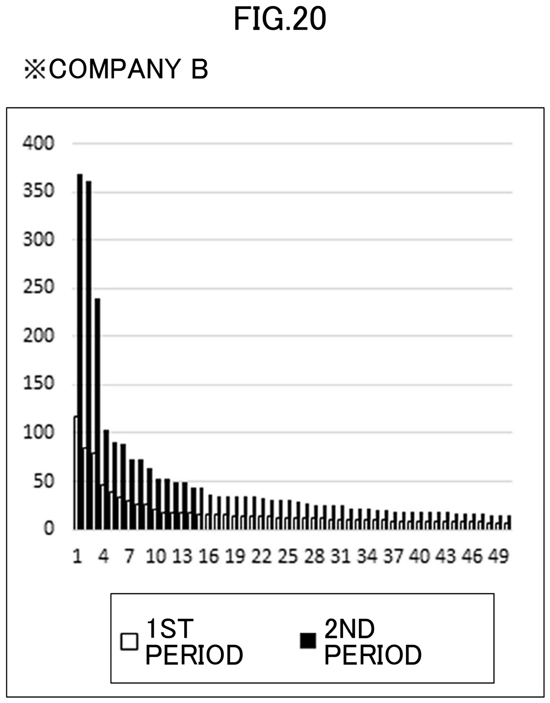

The display screen illustrated in FIG. 19 illustrates a bar graph indicating, for Company G, the number of patents corresponding to each of the top 50 technical classifications ranked by the number of corresponding patents. The display screen illustrated in FIG. 20 illustrates a bar graph indicating, for Company B, the number of patents corresponding to each of the top 50 technical classifications ranked by the number of corresponding patents. In FIGS. 19 and 20, the horizontal axis, serving as a first axis, represents the ranks of the technical classifications arranged in descending order based on the number of corresponding patents. The vertical axis, serving as a second axis, represents the number of patents corresponding to each technical classification. FIGS. 19 and 20 respectively illustrate, for each technical classification, the number of patents classified into the first period and the number of patents classified into the second period.

According to FIG. 19, in the second period, which is later than the first period, the difference between the number of patents in the higher-ranked technical classifications and the number of patents in the lower-ranked technical classifications is reduced. This can be interpreted that the technologies of Company G tend to diverge.

Meanwhile, according to FIG. 20, in the second period, which is later than the first period, the difference between the number of patents in the higher-ranked technical classifications and the number of patents in the lower-ranked technical classifications is increased. Therefore, it can be interpreted that the technologies of Company B tend to concentrate on specific fields.

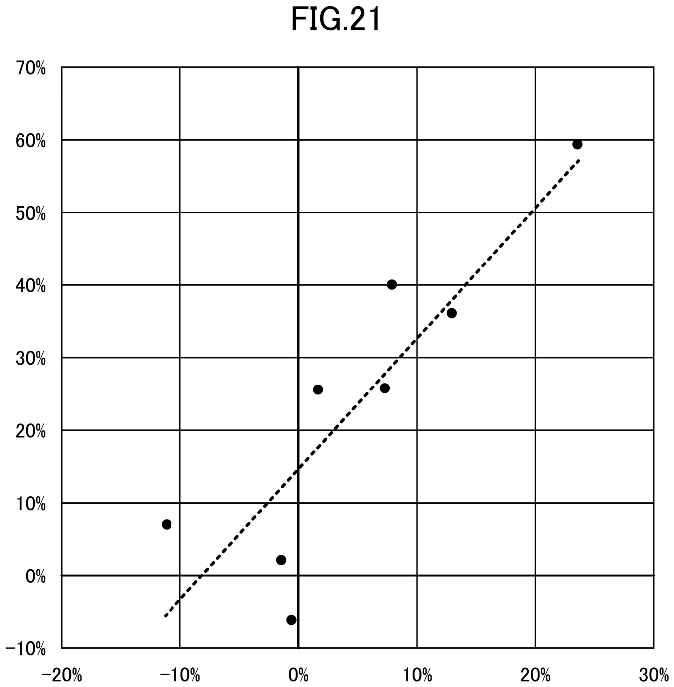

FIG. 21 is an example of a display screen based on the display information generated by the second display information generation process illustrated in FIG. 12, for each of Companies A through H as illustrated in FIG. 13. Specifically, in FIG. 21, the horizontal axis, serving as a first axis, represents the concentration change degree, and the vertical axis, serving as a second axis, represents the change rate in the price-to-book ratio as a financial indicator. FIG. 21 includes plots located at respective positions corresponding to each of the specific applicants, namely Companies A through H.

FIG. 21 includes an approximation line that linearly approximates plots respectively positioned corresponding to Companies A through H. In this case, the correlation coefficient between the concentration degree change and the change rate in the price-to-book ratio is 0.86, and this can be interpreted that there is a correlation between the two variables.

The present disclosure is not limited to the configuration specified in the above-described embodiments, and various modifications are possible.

The following additional clauses are disclosed with respect to the above embodiments.

### (Clause 1)

An information processing apparatus comprising:
an acquirer configured to acquire patent information related to a plurality of patents held by a specific applicant; and
a calculator configured to calculate a concentration degree on a technical classification, the technical classification being extracted under a predetermined condition from a patent group, and the patent group representing a group of patents classified into a predetermined period among the plurality of patents held by the specific applicant.

### (Clause 2)

The information processing apparatus according to Clause 1, wherein the calculator includes:
a first calculator configured to calculate
   a first concentration degree on a technical classification extracted under a predetermined condition from a first patent group, and
   a second concentration degree on the technical classification extracted under the predetermined condition from a second patent group, the first patent group representing a group of patents classified into a first period, the second patent group representing a group of patents classified into a second period later than the first period, and the first group and the second group being formed from among the plurality of patents held by the specific applicant; and
a second calculator configured to calculate a concentration change degree representing a degree of change from the first concentration degree to the second concentration degree.

### (Clause 3)

The information processing apparatus according to Clause 2, wherein the first calculator is configured to:
calculate the first concentration degree, based on a ratio of an evaluation value based on a number of patents in the technical classification extracted under the predetermined condition in the first patent group to an evaluation value based on a number of all patents in the first patent group; and
calculate the second concentration degree, based on a ratio of an evaluation value based on a number of patents in the technical classification extracted under the predetermined condition in the second patent group to an evaluation value based on a number of all patents in the second patent group.

### (Clause 4)

The information processing apparatus according to Clause 2 or 3, wherein the second calculator is configured to calculate the concentration change degree based on an increase rate of the second concentration degree with respect to the first concentration degree.

### (Clause 5)

The information processing apparatus according to any one of Clauses 2 to 4, further comprising:
an output unit configured to output information on the concentration change degree.

### (Clause 6)

The information processing apparatus according to Clause 5, further comprising:
a generator configured to generate display information for graphically displaying the first concentration degree and the second concentration degree in a coordinate system in which a period including the first period and the second period is defined as a first axis, and a concentration including the first concentration and the second concentration is defined as a second axis,
wherein the output unit outputs the display information.

### (Clause 7)

The information processing apparatus according to Clause 6, wherein the generator is configured to generate, as the display information, information in which the first concentration degree and the second concentration degree are each represented by one or both of a bar graph and a line graph, and
the concentration change degree is represented by either a ratio of heights of the bar graphs or a slope of the line graph.

### (Clause 8)

The information processing apparatus according to any one of Clauses 2 to 7, wherein the specific applicant includes a plurality of applicants,
the first calculator is configured to calculate the first concentration degree and the second concentration degree for each of the plurality of applicants, and
the second calculator is configured to calculate the concentration change degree for each of the plurality of applicants.

### (Clause 9)

The information processing apparatus according to any one of Clauses 2 to 8, wherein the specific applicant includes a first specific applicant and a plurality of second specific applicants, and
the first calculator is configured to calculate the first concentration degree and the second concentration degree for the first specific applicant, and for each of the second specific applicants.

### (Clause 10)

The information processing apparatus according to any one of Clauses 5 to 7, further comprising:
a generator configured to generate display information,
wherein the acquirer is further configured to acquire financial indicator information related to the specific applicant,
the calculator further includes a third calculator configured to calculate, based on the financial indicator information, a change rate of a financial indicator of the specific applicant in the second period with respect to a financial indicator of the specific applicant in the first period,
the generator is configured to generate the display information including a plot arranged at a position corresponding to the specific applicant in a coordinate system in which the concentration change degree is defined as a first axis, and the change rate of the financial indicator is defined as a second axis, and
the output unit is configured to output the display information.

### (Clause 11)

The information processing apparatus according to Clause 10, wherein the financial indicator information is information on a price-to-book ratio.

### (Clause 12)

The information processing apparatus according to any one of Clauses 1 to 11, wherein the technical classification extracted under the predetermined condition is a classification whose rank falls within a predetermined rank range among technical classifications included in the plurality of patents held by the specific applicant.

### (Clause 13)

The information processing apparatus according to any one of Clauses 1 to 12, wherein the acquirer is configured to acquire the patent information by treating one patent family as a single patent.

### (Clause 14)

The information processing apparatus according to any one of Clauses 1 to 13, wherein the calculator is configured to determine whether a patent included in the patent information is classified into the predetermined period based on predetermined date information associated with the patent.

### (Clause 15)

An information processing method executed by a computer, the information processing method comprising:
an acquisition step of acquiring patent information related to a plurality of patents held by a specific applicant; and
a calculation step of calculating a concentration degree on a technical classification, the technical classification being extracted under a predetermined condition from a patent group, and the patent group representing a group of patents classified into a predetermined period among the plurality of patents held by the specific applicant.

### (Clause 16)

A program for causing a computer to execute a process comprising:
an acquisition step of acquiring patent information related to a plurality of patents held by a specific applicant; and
a calculation step of calculating a concentration degree on a technical classification, the technical classification being extracted under a predetermined condition from a patent group, and the patent group representing a group of patents classified into a predetermined period among the plurality of patents held by the specific applicant.

### [Industrial applicability]

The present disclosure relates to an information processing apparatus, an information processing method, and a program for executing information processing based on patent information.

The present international application claims priority under Japanese patent application 2023-008634, filed on January 24, 2023, the entire contents of which are incorporated by reference herein.

### Reference Signs List

1, 100, 200: information processing apparatus
2: network
3: patent database
4: terminal apparatus
5, 6: information processing system
10: acquirer
11: patent information
30: calculator
31: first calculator
32: second calculator
33: third calculator
40: generator
50: output unit
110: communication unit
120: controller
130: storage unit
240: input unit
250: display unit

## Claims

1. An information processing apparatus comprising:
an acquirer configured to acquire patent information related to a plurality of patents held by a specific applicant; and
a calculator configured to calculate a concentration degree on a technical classification, the technical classification being extracted under a predetermined condition from a patent group, and the patent group representing a group of patents classified into a predetermined period among the plurality of patents held by the specific applicant.

2. The information processing apparatus according to claim 1, wherein the calculator includes:
a first calculator configured to calculate
a first concentration degree on a technical classification extracted under a predetermined condition from a first patent group, and
a second concentration degree on the technical classification extracted under the predetermined condition from a second patent group, the first patent group representing a group of patents classified into a first period, the second patent group representing a group of patents classified into a second period later than the first period, and the first group and the second group being formed from among the plurality of patents held by the specific applicant; and
a second calculator configured to calculate a concentration change degree representing a degree of change from the first concentration degree to the second concentration degree.

3. The information processing apparatus according to claim 2, wherein the first calculator is configured to:
calculate the first concentration degree, based on a ratio of an evaluation value based on a number of patents in the technical classification extracted under the predetermined condition in the first patent group to an evaluation value based on a number of all patents in the first patent group; and
calculate the second concentration degree, based on a ratio of an evaluation value based on a number of patents in the technical classification extracted under the predetermined condition in the second patent group to an evaluation value based on a number of all patents in the second patent group.

4. The information processing apparatus according to claim 2, wherein the second calculator is configured to calculate the concentration change degree based on an increase rate of the second concentration degree with respect to the first concentration degree.

5. The information processing apparatus according to claim 2, further comprising:
an output unit configured to output information on the concentration change degree.

6. The information processing apparatus according to claim 5, further comprising:
a generator configured to generate display information for graphically displaying the first concentration degree and the second concentration degree in a coordinate system in which a period including the first period and the second period is defined as a first axis, and a concentration including the first concentration and the second concentration is defined as a second axis,
wherein the output unit outputs the display information.

7. The information processing apparatus according to claim 6, wherein the generator is configured to generate, as the display information, information in which the first concentration degree and the second concentration degree are each represented by one or both of a bar graph and a line graph, and
the concentration change degree is represented by either a ratio of heights of the bar graphs or a slope of the line graph.

8. The information processing apparatus according to claim 2, wherein the specific applicant includes a plurality of applicants,
the first calculator is configured to calculate the first concentration degree and the second concentration degree for each of the plurality of applicants, and
the second calculator is configured to calculate the concentration change degree for each of the plurality of applicants.

9. The information processing apparatus according to claim 2, wherein the specific applicant includes a first specific applicant and a plurality of second specific applicants, and
the first calculator is configured to calculate the first concentration degree and the second concentration degree for the first specific applicant, and for each of the second specific applicants.

10. The information processing apparatus according to claim 5, further comprising:
a generator configured to generate display information,
wherein the acquirer is further configured to acquire financial indicator information related to the specific applicant,
the calculator further includes a third calculator configured to calculate, based on the financial indicator information, a change rate of a financial indicator of the specific applicant in the second period with respect to a financial indicator of the specific applicant in the first period,
the generator is configured to generate the display information including a plot arranged at a position corresponding to the specific applicant in a coordinate system in which the concentration change degree is defined as a first axis, and the change rate of the financial indicator is defined as a second axis, and
the output unit is configured to output the display information.

11. The information processing apparatus according to claim 10, wherein the financial indicator information is information on a price-to-book ratio.

12. The information processing apparatus according to claim 1, wherein the technical classification extracted under the predetermined condition is a classification whose rank falls within a predetermined rank range among technical classifications included in the plurality of patents held by the specific applicant.

13. The information processing apparatus according to claim 1, wherein the acquirer is configured to acquire the patent information by treating one patent family as a single patent.

14. The information processing apparatus according to claim 1, wherein the calculator is configured to determine whether a patent included in the patent information is classified into the predetermined period based on predetermined date information associated with the patent.

15. An information processing method executed by a computer, the information processing method comprising:
an acquisition step of acquiring patent information related to a plurality of patents held by a specific applicant; and
a calculation step of calculating a concentration degree on a technical classification, the technical classification being extracted under a predetermined condition from a patent group, and the patent group representing a group of patents classified into a predetermined period among the plurality of patents held by the specific applicant.

16. A program for causing a computer to execute a process comprising:
an acquisition step of acquiring patent information related to a plurality of patents held by a specific applicant; and
a calculation step of calculating a concentration degree on a technical classification, the technical classification being extracted under a predetermined condition from a patent group, and the patent group representing a group of patents classified into a predetermined period among the plurality of patents held by the specific applicant.
